# EUROPÄISCHE PATENTANMELDUNG

(11) **EP 1 319 442 A1**
(43) Veröffentlichungstag der Anmeldung: **18.06.2003**
(21) Anmeldenummer: 01129868.4
(22) Anmeldetag: 14.12.2001
(51) Int. Cl.: B05B 15/12, B01D 50/00

(54) **Verfahren und Vorrichtung zur Pulverrückgewinnung bei der elektrostatischen Pulverbeschichtung**

(71) Anmelder: J. Wagner AG, 9450 Altstätten (CH)
(72) Erfinder: Von Keudell, Leopold, 88682 Salem (DE)
(74) Vertreter: Liesegang, Roland, Dr.-Ing.

(57) **Zusammenfassung**

Eine Vorrichtung zur Pulverrückgewinnung bei der elektrostatischen Pulverbeschichtung von Werkstücken in einer Pulverbeschichtungsanlage mit einem Zyklon (2), der ein Separationsteil zum Trennen von Überschußpulver aus einem Pulver-Luftgemisch, eine Siebvorrichtung (141,151), eine Auffangvorrichtung (142,152) und eine Fördervorrichtung zum Rückführen des rückgewonnenen Pulvers in einem Pulverkreislauf hat, zeichnet sich dadurch aus, daß mindestens die Siebvorrichtung (141,151) und die Auffangvorrichtung (142,152) in einer Einheit (14,15) zusammengefaßt sind, die zwischen einer Betriebsposition und einer Reinigungsposition bewegbar ist, und das die Einheit (14,15) zweifach vorgesehen ist, wobei abwechselnd eine Einheit (14,15) in Betriebsposition und die andere Einheit (14,15) in Reinigungsposition bringbar ist.

## Beschreibung

Die Erfindung betrifft ein Verfahren und eine Vorrichtung zur Pulverrückgewinnung bei der elektrostatischen Pulverbeschichtung.

Beim Pulverbeschichten von Werkstücken wird das Werkstück durch eine Kabine geführt und in dieser Kabine mit Pulver beschichtet. Dabei schlägt sich nicht das gesamte, durch die Applikationsgeräte in die Kabine geförderte Pulver auf dem Werkstück nieder, so daß sich ein Teil des Überschußpulvers auf dem Boden der Kabine ablagert.

Bei bekannten Pulverbeschichtungsanlagen wird dieses Überschußpulver mittels einer technischen Lüftung aus der Kabine abgesaugt. Das nicht auf den Werkstücken abgelagerte Pulver wird üblicherweise wieder dem Prozeß zugeführt. Bei bekannten Pulverbeschichtungsanlagen wird dies mit einem oder mehreren Zyklonen realisiert. Dabei wird das Pulver aus dem Pulver-Luftgemisch im Zyklon getrennt und mit einer Fördervorrichtung wieder dem Prozeß zugeführt. Zusätzlich kann das Kreislaufpulver mittels einer Siebvorrichtung von Verunreinigungen befreit werden.

Vor einem Farbwechsel müssen alle Komponenten, die in Kontakt mit dem Beschichtungspulver kommen, einer Reinigung unterzogen werden. Um Farbverschleppungen zu vermeiden, die zu unbrauchbaren Beschichtungen führen würden, müssen insbesondere der Pulverauffangtrichter, die Siebvorrichtung sowie die Rückförderleitung zum Pulverbehälter für den erneuten Einsatz mit anderer Pulverfarbe einer gründlichen Reinigung unterzogen werden. Dies erfordert einen beachtlichen zeitlichen Aufwand.

Aufgabe der Erfindung ist es, ein Verfahren und eine Vorrichtung zu schaffen, welche einen schnelleren Farbwechsel erlauben und zudem eine gründlichere Reinigung ermöglichen.

Diese Aufgabe lösen eine Vorrichtung nach Anspruch 1 und ein Verfahren nach Anspruch 2. Vorteilhafte Ausgestaltungen der Erfindung sind in den Unteransprüchen angegeben.

Bei einer Vorrichtung gemäß der Erfindung hat der Zyklon einen Einlaß für das Pulver-Luftgemisch, ein Separationsteil, in dem das Pulver aus dem Pulver-Luftgemisch getrennt wird, eine Auffangvorrichtung, in der das Pulver aufgefangen wird, sowie eine Siebvorrichtung, die zwischen dem Separationsteil und dem Auffangtrichter angeordnet ist. Das in der Auffangvorrichtung angesammelte Pulver wird mit einer Fördereinrichtung über Leitungen wieder in den Pulverkreislauf des Prozesses zurückgeführt.

Gemäß der Erfindung sind die Siebvorrichtung und die Auffangvorrichtung und vorteilhafterweise auch die Fördervorrichtung und die Förderleitung zu einer Einheit zusammengefaßt, die zwischen einer Betriebsposition und einer Reinigungsposition beweglich am Zyklon montiert ist. Diese Einheit ist zweifach vorgesehen.

Bei einem Farbwechsel wird die erste Einheit aus der Betriebsposition geschwenkt. Während der Unterbrechung wird lediglich der obere Teil des Zyklons gereinigt. Danach wird die zweite Einheit mit Siebvorrichtung und Auffangvorrichtung, gegebenenfalls noch mit Fördervorrichtung sowie Leitungen, die in Reinigungsposition geparkt waren, in die Betriebsposition geschwenkt und mit einer Andrückvorrichtung (z. B. Pneumatikzylinder) an den unteren Teil des Zyklons gepreßt. Dadurch kann die zeitliche Unterbrechung der Pulverbeschichtung zwecks Reinigung vor einem Farbwechsel bedeutend reduziert werden.

Nun kann der Beschichtungsprozeß mit dem neuen Pulver gestartet werden. Die Siebvorrichtung, die Auffangvorrichtung, z. B. ein Auffangtrichter, und die Fördervorrichtung mit Leitungen der ersten Einheit werden nun in aller Ruhe gereinigt. Das Sieb und der Auffangtrichter können beispielsweise mit einem Sauger abgereinigt werden. Die Fördervorrichtung und speziell die Leitungen können mit einem sogenannten Molch gereinigt werden. Auf Grund des wegfallenden Zeitdruckes kann die Reinigung gründlicher durchgeführt werden. Zudem wird zusätzliche Zeit für eventuell nötige Wartungsarbeiten frei, z. B. für einen Siebwechsel, dies alles ohne Störung des Beschichtungsprozesses.

Die Erfindung ist im folgenden anhand von Zeichnungen an einem Ausführungsbeispiel mit weiteren Einzelheiten näher erläutert. Es zeigen:
- Fig. 1: einen Zyklon mit zwei Einheiten mit Sieb und Auffangtrichter in ausgeschwenktem Zustand in perspektivischer Darstellung;
- Fig. 2: eine Seitenansicht des Zyklons mit einer Einheit in Betriebszustand;
- Fig. 3: in einer perspektivischen Darstellung wie in Fig. 1 die ausgeschwenkten Einheiten ohne Zyklongehäuse;
- Fig. 4: in einer Ansicht von oben den Zyklon in einem Zustand gemäß Fig. 2 mit einer Einheit in Betriebsposition und der anderen Einheit in Reinigungsposition, und
- Fig. 5: eine Seitenansicht des unteren Teils des Zyklons mit Fördervorrichtung und Förderleitung für das zurückgewonnene Pulver.

In den Figuren ist mit der Bezugszahl 2 ein Zyklon bezeichnet, dessen Saugleitung 4 über einen Einlaß 6 über den Innenraum einer nicht gezeigten Pulverbeschichtungskabine verbunden ist.

Ein zentralerAuslaß 8 des Zyklons ist an eine ebenfalls nicht gezeigte Nachfiltereinheit mit Gebläse angeschlossen. Der Zyklon 2 ist in einem ortsfesten Traggestell 10 befestigt. Der Zyklon hat einen oberen Separationsteil 12, der sich zu seinem unteren Ende hin konisch verjüngt.

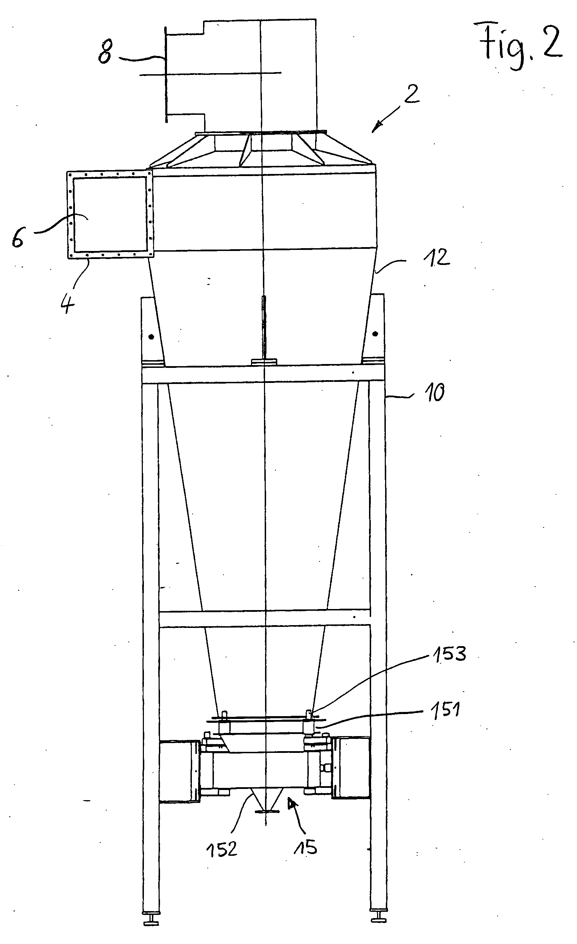

Unterhalb des Separationsteils 12 sind zwei gleichartige Einheiten 14, 15 schwenkbar am Traggestell 10 so montiert, daß sie mittels eines nicht gezeigten Antriebes in Fluchtung und Anpressung an die Unterseite des Zyklons geschwenkt werden können. Diese Betriebsposition der Einheiten 14 und 15 ist in den Fig. 2, 4 und 5 dargestellt.

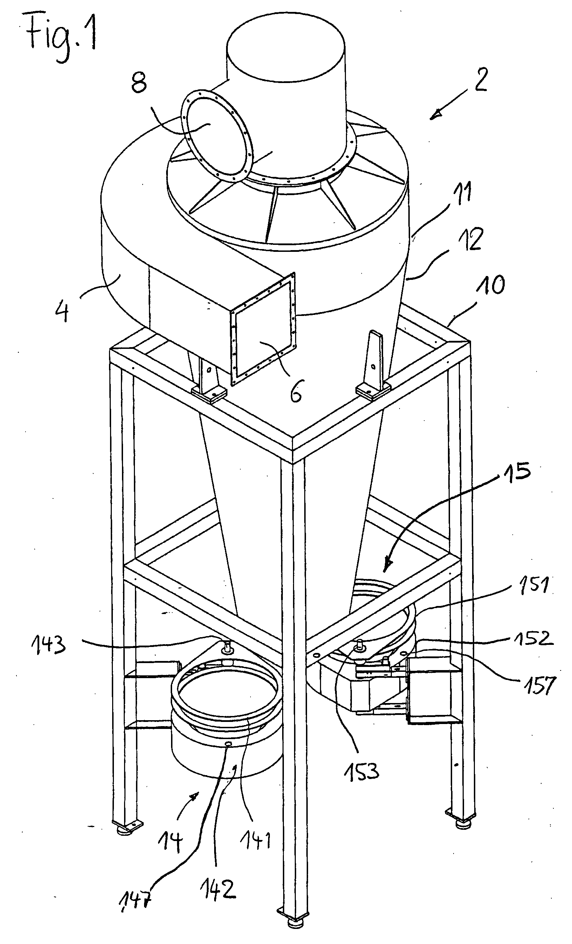

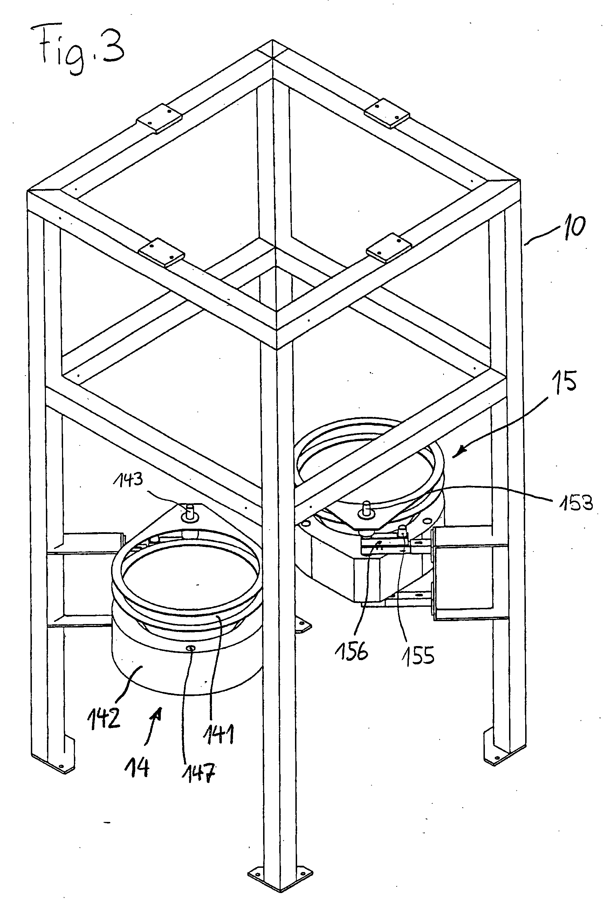

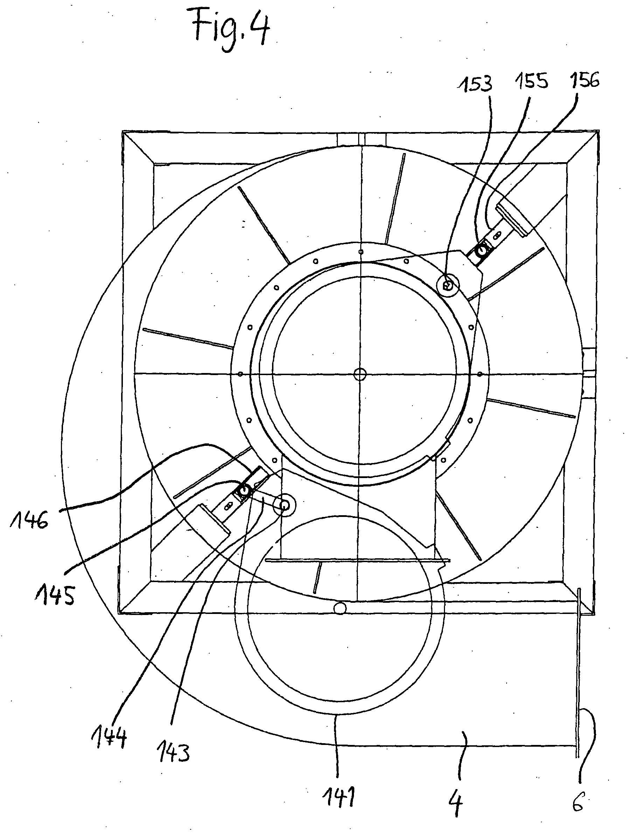

In den Fig. 1 und 3 sind die Einheiten 14, 15 in ausgeschwenkter, vom Zyklon entfernter Reinigungsposition dargestellt, während in Figur 4 nur die Einheit 14 in dieser Reinigungsposition gezeigt ist, während sich die Einheit 15 in Betriebsposition befindet.

Jede Einheit 14, 15 hat eine Siebvorrichtung 141, 151 und einen darunter angeordneten Auffangtrichter 142, 152, für im Seperationsteil 12 abgetrenntes Überschußpulver, das in den Pulverkreislauf zurückzufördern ist.

Die Einheiten 14, 15 sind um einen Gelenkzapfen 143, 153 schwenkbar, der seinerseits über einen Lenker 144, 154 mit einem Führungsstift 145, 155 verbunden ist, welcher längs einer diagonal zum Zyklon ausgerichteten Gradführung 146, 156 verschieblich ist. Dies ist am besten in Fig. 4 zu erkennen. Dort ist die eine Einheit 14 vom Zyklon weg in Reinigungsposition geschwenkt, während die andere Einheit 15 in eine Betriebsposition geschwenkt ist, in der die Einheit 15 mit dem Zyklon 2 fluchtend an dessen Unterseite angepreßt ist.

Die geschilderte Schwenkbewegung wird durch den erwähnten Antrieb erzeugt, beispielsweise durch einen Fluidzylinder, der am Punkt 147, 157 (Fig. 1) an der jeweiligen Einheit 14, 15 angreift, genauer gesagt an deren Auffangtrichter 142, 152.

Der Betrieb ist nachfolgend geschildert. In der in Figur 1 dargestellten Stellung befinden sich beide Einheiten 14, 15 in ausgeschwenkter Reinigungsposition. In dieser Reinigungsposition ist die gebrauchte, durch Farbpartikel verschmutze Einheit 14 gerade in die Reinigungsposition ausgeschwenkt, während die bereits gereinigte andere Einheit 15 noch nicht in die mit dem Zyklon 2 fluchtende Betriebsposition eingeschwenkt ist. Während dieses Zustandes wird der Separationsteil 12 des Zyklons von unten her gereinigt, beispielsweise durch Abblasen mittels einer Düsenlanze mit Druckluft, oder durch Absaugen

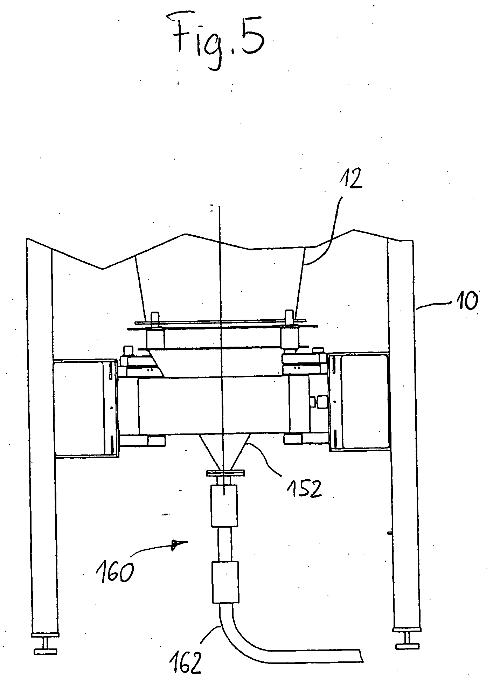

Danach wird die bereits gereinigte Einheit 15 in die Betriebsposition eingeschwenkt, in welcher sie mit dem Zyklon 2 fluchtend an dessen Unterseite angedrückt ist, wie dies in den Figuren 2 und 4 gezeigt ist. Nun kann erneut eine Pulverbeschichtung in der Kabine mit neuem Pulver gestartet werden. Gleichzeitig können die Siebvorrichtung 141, der Auffangtrichter 142 und eine an das untere Ende des Auffangtrichters 142 angeschlossene Fördervorrichtung 160 mit Förderleitung 162 (Figur 5) für das zurückgewonnene und gesiebte Überschußpulver in aller Ruhe gereinigt werden. Beispielsweise können die Siebvorrichtung 141 und die Fördervorrichtung 142 mittels eines Saugers abgereinigt werden. Die Fördervorrichtung 160 und die Förderleitung 162 können mit einem sogenannten Molch gereinigt werden, der in die Förderleitung einführbar ist.

Diese Reinigung kann gründlicher als bisher durchgeführt werden, weil damit kein Zeitausfall mehr bei der Pulverbeschichtung verbunden ist. Überdies steht auch noch Zeit für eventuell erforderliche Wartungsarbeiten zur Verfügung, beispielsweise für einen Wechsel der Siebvorrichtung 141 oder 151. Die Pulverbeschichtung wird durch diese Reinigungs- und/oder Wartungsarbeiten in keiner Weise beeinflußt.

Anstatt schwenkbarer Einheiten 14, 15 könnten auch translatorisch bewegbare Einheiten vorgesehen werden.

Die in der obigen Beschreibung, den Figuren und den Ansprüchen offenbarten Merkmale können sowohl einzeln als auch in beliebiger Kombination für die Verwirklichung der Erfindung von Bedeutung sein.

## Patentansprüche

1. Vorrichtung zur Pulverrückgewinnung bei der elektrostatischen Pulverbeschichtung von Werkstücken in einer Pulverbeschichtungsanlage mit einem Zyklon (2), der ein Separationsteil (12) zum Trennen von Überschußpulver aus einem Pulver-Luftgemisch, eine Siebvorrichtung (141, 151), eine Auffangvorrichtung (142, 152) und eine Fördervorrichtung zum Rückführen des rückgewonnenen Pulvers in einen Pulverkreislauf hat, **dadurch gekennzeichnet, daß** mindestens die Siebvorrichtung (141, 151) und die Auffangvorrichtung (142, 152) in einer Einheit (14, 15) zusammengefaßt sind, die zwischen einer Betriebsposition und einer Reinigungsposition bewegbar ist, und daß die Einheit zweifach vorgesehen ist, wobei abwechselnd eine Einheit (14 oder 15) in Betriebsposition und die andere Einheit (15 oder 14) in Reinigungsposition bringbar ist.

2. Verfahren zur Pulverrückgewinnung bei der elektrostatischen Pulverbeschichtung von Werkstücken in einer Pulverbeschichtungsanlage, wobei Überschußpulver aus einem Pulver-Luftgemisch in einem Zyklon abgetrennt wird, der ein Separationsteil zum Trennen von Überschußpulver aus einem Pulver-Luftgemisch, eine Siebvorrichtung, eine Auffangvorrichtung und eine Fördervorrichtung zum Rückführen des abgetrennten Pulvers in einen Pulverkreislauf hat, **dadurch gekennzeichnet, daß** zwei Einheiten (14, 15), die jeweils eine Siebvorrichtung (141, 151) und eine Auffangvorrichtung (142, 152) für abgetrenntes Überschußpulver haben, vorgesehen werden, und daß jeweils für einen Farbwechsel
a) die eine Einheit (14 oder 15) aus einer Betriebsposition in eine Reinigungsposition und danach
b) die andere Einheit (15 oder 14) einer Reinigungsposition in die Betriebsposition verlagert werden, und daß
c) die eine Einheit (14 oder 15) während wiederaufgenommener Pulverbeschichtung gereinigt wird.

3. Verfahren nach Anspruch 2, **dadurch gekennzeichnet, daß** zwischen den Schritten a) und b) während eines Zeitraumes, in welchem die andere bereits gereinigte Einheit (15 oder 14) noch in Reinigungsposition ist, das Gehäuse (11) des Zyklons (2) abgereinigt wird.

4. Verfahren nach Anspruch 3, **dadurch gekennzeichnet, daß** rückgewonnenes Überschußpulver über ein Fördervorrichtung (160), welche an die Austrittsseite der Auffangvorrichtung (142, 152) angeschlossen ist, in den Pulverkreislauf zurückgefördert wird.

5. Verfahren nach Anspruch 4, **dadurch gekennzeichnet, daß** auch die Fördervorrichtung (160) und eine daran angeschlossene Förderleitung (162) Teile der Einheiten (14, 15) bilden und in Reinigungsposition zusammen mit deren übrigen Bestandteilen gereinigt werden.

6. Vorrichtung nach Anspruch 1, **dadurch gekennzeichnet, daß** jede Einheit (14, 15) eine Fördervorrichtung (160) hat, die an die Austrittsseite der Auffangvorrichtung (142, 152) angeschlossen ist.

7. Vorrichtung nach Anspruch 1 oder 6, **dadurch gekennzeichnet, daß** jede Einheit (14, 15) zwischen der Betriebsposition und der Reinigungsposition schwenkbeweglich an dem Zyklon angebracht ist.

8. Vorrichtung nach Anspruch 1 oder 6, **dadurch gekennzeichnet, daß** jede Einheit (14, 15) zwischen der Betriebsposition und der Reinigungsposition translatorisch beweglich an dem Zyklon angebracht ist.

9. Vorrichtung nach einem der Ansprüche 1 oder 6 bis 8, **dadurch gekennzeichnet, daß** jede Einheit (14, 15) mittels eines Antriebes, wie eines Fluidzylinders oder eines elektrischen Antriebes, zwischen der Betriebsposition und der Reinigungsposition bewegbar ist.
